(19) Europäisches Patentamt
European Patent Office
Office européen des brevets

(11) **EP 3 018 095 B1**

(12) **EUROPEAN PATENT SPECIFICATION**

(45) Date of publication and mention
of the grant of the patent:
**28.06.2017  Bulletin 2017/26**

(51) Int Cl.:
***C01B 3/38*** *(2006.01)*

(21) Application number: **14192565.1**

(22) Date of filing: **10.11.2014**

(54) **Steam-hydrocarbon reforming process**

Dampf-Kohlenwasserstoffreformationsverfahren

Procédé de reformage d'hydrocarbures à vapeur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.05.2016  Bulletin 2016/19**

(73) Proprietor: **AIR PRODUCTS AND CHEMICALS, INC.**
**Allentown, PA 18195-1501 (US)**

(72) Inventors:
• **Achilles, Geoffrey Colling**
 **Allentown, PA  18104 (US)**
• **Daugherty, Tamara Lynn**
 **Allentown, PA  18104 (US)**
• **Schoonover, Michelle**
 **Macungie, PA 18062 (US)**
• **Smith IV, Oliver Jacob**
 **New Tripoli, PA 18066 (US)**
• **MacConnell, Matthew H.**
 **Orefield, PA  18069 (US)**
• **Li, Xianming Jimmy**
 **Orefield, PA 18069 (US)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
**US-A1- 2001 032 965     US-A1- 2009 094 894**
**US-A1- 2009 232 729     US-A1- 2014 134 547**

**Description**

BACKGROUND

The present invention relates to a process for reforming methane and higher hydrocarbons to produce a synthesis gas (syngas) product and/or a hydrogen product. A synthesis gas product is a product comprising primarily CO and $H_2$. Reformed hydrocarbons may be further reacted in one or more shift reactors to form additional $H_2$ in the process stream and separated in a separation unit, such as a pressure swing adsorption unit, to form a $H_2$ product.

Synthesis gas is conventionally used to produce synthesis gas products such as synthetic crude, or further upgraded to form intermediate or end products, for example lubricant basestock, lubricants, greases, middle distillate fuels, diesel, linear alkylbenzenes aviation and jet fuels, gasoline, and other chemicals, i.e. normal- and isoparaffinic solvents. The synthesis gas may also be used to produce one or more oxygenates, for example, ethers and/or alcohols.

Synthesis gas (including hydrogen) can be produced from methane-containing feedstocks by any number of primary synthesis gas generation reactors. For example, synthesis gas can be produced in a steam methane reformer (SMR), an endothermic reactor where reaction is carried out either in heat exchange reactors, or by other means where substantial heat may be transferred to the reacting fluid, such as in the case of autothermal reforming (ATR), where a portion of the feedstock is combusted inside the reactor to provide heat for steam reforming either subsequently or in the same location as the combustion.

Synthesis gas can also be produced from methane-containing feedstocks by $CO_2$ ("dry") reforming, catalytic or thermal partial oxidation (CPOx or POx, respectively) and other processes known in the art.

Various feedstocks can be used to produce synthesis gas and industry desires to process multiple feedstocks. Industry desires the ability to change from one feedstock to another during operation without shutting down the reactor. For example, a synthesis gas producer may desire to use natural gas for 6 months, naphtha for 3 months, and then a mixture of natural gas and naphtha for 2 months. Industry desires to process different feedstocks at optimal energy efficiency while avoiding carbon formation in the primary synthesis gas reactor.

In addition to being able to process multiple feedstocks, industry desires to be able to process a feedstock where the composition, particularly the C2+ hydrocarbon concentration in the feedstock, varies over time. For example, synthesis gas may be produced from a refinery offgas where the C2+ hydrocarbon concentration varies from 2 vol. % to 15 vol. % depending on the refinery operation.

If the feedstock contains higher hydrocarbons than methane, that is, hydrocarbons having 2 or more carbon atoms (C2+ hydrocarbons) are used in the reforming process, the risk for catalyst deactivation by carbon deposition in the primary synthesis gas generation reactor is increased. Industry desires to avoid carbon formation in the synthesis gas generation reactor.

In order to reduce the risk of carbon deposition in the primary synthesis gas generation reactor, hydrogen and synthesis gas production processes may employ at least one catalytic reactor prior to the primary synthesis gas generation reactor where the catalytic reactor is operated at conditions less prone to hydrocarbon cracking than the primary synthesis gas generation reactor. These reactors positioned before the primary synthesis gas generation reactors are referred to as pre-reformers. Prereformers can be operated adiabatically or convectively heated by indirect heat transfer with combustion products gases from the primary synthesis gas generation reactor.

The activity of the catalyst in the pre-reformer may degrade with use. Industry desires to compensate for the degradation of the pre-reforming catalyst through operational changes to avoid carbon formation in the primary synthesis gas generation reactor while maintaining optimal energy efficiency of the overall process.

In hydrogen and synthesis gas production processes employing pre-reformers and steam methane reformers, the hydrocarbon feedstock may be mixed with hydrogen for a resultant stream having 1 to 5 % hydrogen by volume, and subsequently subjected to a hydrodesulphurization (HDS) pretreatment to remove sulphur. The hydrocarbon feedstock may also be treated to remove olefins in a hydrogenation reactor. In case $H_2$ is present in the feedstock, additional $H_2$ might not be added.

For steam reforming of heavy naphthas, hydrogen concentrations as high as about 50 volume % $H_2$ are known where the mixture is subsequently pretreated in a hydrodesulphurization unit and/or a hydrogenation reactor. Even higher hydrogen concentrations are possible depending on the feedstock provided.

The feedstock, after pretreating, is combined with superheated steam to form "mixed feed" having a prescribed steam-to-carbon molar ratio. The steam-to-carbon molar ratio, S/C, is the ratio of the molar flow rate of steam in the mixed feed to the molar flow rate of hydrocarbon-based carbon in the mixed feed. The "steam-to-carbon molar ratio" is a conventional term used in the art.

The steam-to-carbon molar ratio for steam methane reforming of natural gas typically ranges from 2 to 5, but can be as low as 1.5. The steam-to-carbon molar ratio is generally higher for steam methane reforming of feedstock containing a greater amount of higher hydrocarbons, for example, propane, butane, propane/butane mixtures, and naphtha.

Higher steam flow rates are used to suppress carbon formation and enhance the steam reforming reaction. However, higher steam-to-carbon molar ratios disadvantageously decrease the energy efficiency of the reforming process. Industry desires to improve the energy efficiency of steam-hydrocarbon reforming systems.

A process according to the preamble of claim 1 in which a feed stream is reacted in a first reactor in the presence of a catalyst to form an intermediate product stream and at least a portion of the intermediate product stream is reacted in a second reactor in the presence of a second catalyst is known from US 2009/0232729 A1 and also from US 2009/0094894 A1.

BRIEF SUMMARY

The present invention relates to a steam-hydrocarbon reforming process utilizing a prereformer.

There are several aspects of the invention as outlined below. In the following, specific aspects of the invention are outlined below. The reference numbers and expressions set in parentheses are referring to an example embodiment explained further below with reference to the figures. The reference numbers and expressions are, however, only illustrative and do not limit the aspect to any specific component or feature of the example embodiment. The aspects can be formulated as claims in which the reference numbers and expressions set in parentheses are omitted or replaced by others as appropriate.

Aspect 1. A steam-hydrocarbon reforming process comprising:

passing a feed stream (21) to a first reactor (100) containing a catalyst (105) during a first period, reacting the feed stream (21) in the first reactor (100) in the presence of the catalyst (105) under reaction conditions sufficient to react the feed stream (21) and form an intermediate product stream (30), and withdrawing the intermediate product stream (30) from the first reactor (100); wherein the feed stream (21) comprises steam and hydrocarbons including C2+ hydrocarbons, wherein the concentration of the C2+ hydrocarbons in the feed stream (21) varies during the first period; wherein the feed stream (21) has a molar flow rate of hydrocarbons, $F_{HC}$; and wherein the feed stream (21) has a molar flow rate of steam, $F_S$, thereby defining a ratio, $F_S/F_{HC}$, of the molar flow rate of steam to the molar flow rate of hydrocarbons in the feed stream (21);

dividing the intermediate product stream (30) into a first portion (31) and a second portion (32), the second portion (32) of the intermediate product stream (30) having a mass flow rate, $M_1$;

introducing a second reactor feed stream (35) comprising the first portion (31) of the intermediate product stream (30) into a second reactor

(110), reacting the second reactor feed stream (35) in the second reactor (110) in the presence of a second catalyst (117) under reaction conditions sufficient to form a reformate (40) comprising $H_2$, CO, $CH_4$, and $H_2O$, and withdrawing the reformate (40) from the second reactor (110);

conditioning the second portion (32) to remove at least water and ammonia and form a conditioned portion (85) of the second portion (32) of the intermediate product stream (30);

measuring a C2+ hydrocarbon content in the conditioned portion (85) of the second portion (32) of the intermediate product stream (30) in a chemical component analyzer (90);

increasing the ratio of the molar flow rate of steam to the molar flow rate of hydrocarbons in the feed stream (21) responsive to the step of measuring the C2+ hydrocarbon content when the C2+ hydrocarbon content equals or exceeds an upper target C2+ hydrocarbon content during the first period; and

decreasing the ratio of the molar flow rate of steam to the molar flow rate of hydrocarbons in the feed stream (21) responsive to the step of measuring the C2+ hydrocarbon content when the C2+ hydrocarbon content equals or drops below a lower target C2+ hydrocarbon content during the first period.

Aspect 2. The process of aspect 1 wherein the second reactor feed stream (35) is introduced into a plurality of catalyst-containing reformer tubes (115) in the second reactor (110), and wherein the reformate (40) is withdrawn from the plurality of catalyst-containing reformer tubes (115), the process further comprising:

combusting a fuel (190) with an oxidant gas (57) in a combustion section (112) of the second reactor (110) external to the plurality of catalyst-containing reformer tubes (115) under conditions sufficient to combust the fuel (190) to form a combustion product gas (254) and generate heat to supply energy for reacting the second reactor feed stream (35) inside the plurality of catalyst-containing reformer tubes (115), and withdrawing the combustion product gas (254) from the combustion section (112).

Aspect 3. The process of aspect 1 or aspect 2 wherein the step of conditioning comprises:

removing water from the second portion (32) of the intermediate product stream (30) by condensation to form a water-depleted portion (65) of the second portion (32) of the intermediate product stream (30);

removing ammonia from the water-depleted portion (65) of the second portion (32) of the intermediate product stream (30) thereby forming an ammonia-depleted portion (75) of the second portion (32) of the intermediate product stream (30); and

passing the ammonia-depleted portion (75) to a dryer (80) to remove water and form a dried portion (82) of the second portion (32) of the intermediate product stream (30), the dried portion (82) of the second portion (32) having a mass flow rate, $M_d$;

wherein the conditioned portion (85) of the second portion (32) of the intermediate product stream (30) comprises at least a portion of the dried portion (82).

Aspect 4. The process of the preceding aspect wherein the dryer (80) is a membrane dryer.

Aspect 5. The process of aspect 3 or aspect 4 wherein $M_d \leq 0.20 \times M_1$.

Aspect 6. The process of any one of the preceding aspects wherein the chemical component analyzer is a gas chromatograph.

Aspect 7. The process of any one of the preceding aspects further comprising:

separating the reformate (40) by pressure swing adsorption to produce a hydrogen-containing product (185) and a by-product gas (187).

Aspect 8. The process of any one of the preceding aspects further comprising:

pretreating a feedstock (10) comprising hydrocarbons including C2+ hydrocarbons by hydrogenation and/or hydrodesulphurization; and mixing steam (20) with the pretreated feedstock to form the feed stream (21) to the first reactor (100).

Aspect 9. The process of the preceding aspect further comprising supplying at least a portion (15) of the hydrogen-containing product (185) of aspect 7 for the pretreatment of the feedstock (10).

Aspect 10. The process of any one of the preceding aspects further comprising:

increasing the ratio of the molar flow rate of steam to the molar flow rate of hydrocarbons in the feed stream (21) responsive to the step of measuring the C2+ hydrocarbon content;

measuring the C2+ hydrocarbon content in the conditioned portion (85) while reacting the feed stream (21) with the increased ratio in the first reactor (100);

comparing the measured C2+ hydrocarbon content with an allowable content value representative for the C2+ hydrocarbon content in the conditioned portion (85) at the increased ratio of the molar flow rate of steam to the molar flow rate of hydrocarbons; and

replacing the catalyst (105) in the first reactor (100) if the measured C2+ hydrocarbon content is greater than the allowable content value.

Aspect 11. The process of any one of the preceding aspects wherein the step of conditioning comprises:

cooling the second portion (32) in a heat exchanger (50) of the intermediate product stream (30) to condense water from the second portion (32) thereby forming a liquid fraction and a vapor fraction;

dividing the cooled second portion (32) into a water-depleted vapor fraction-enriched portion (65) having a time-averaged mass flow rate, $F_1$, a liquid fraction-enriched portion (59) having a time-averaged mass flow rate, $F_2$; and

removing at least water and ammonia from the water-depleted vapor fraction-enriched portion (65) to form the conditioned portion (85);

wherein $F_1$ and $F_2$ are controlled such that

$$0 < \frac{F_1}{F_1 + F_2} \leq 0.2 \,.$$

Aspect 12. The process of any one of the preceding aspects wherein control of the ratio ($F_S/F_{HC}$) of the molar flow rate of steam to the molar flow rate of hydrocarbons in the feed stream (21) is based primarily or solely on the measured C2+ hydrocarbon content in the conditioned portion (85).

Aspect 13. The process of any one of the preceding aspects wherein the C2+ hydrocarbon content is either a concentration of C2+ hydrocarbons in the conditioned portion (85) of the second portion (32) of the intermediate product stream (30) or a ratio of the C2+ hydrocarbon content and a measured $H_2$, CO or $CH_4$ content in the conditioned portion (85).

BRIEF DESCRIPTION OF SEVERAL VIEWS OF THE DRAWINGS

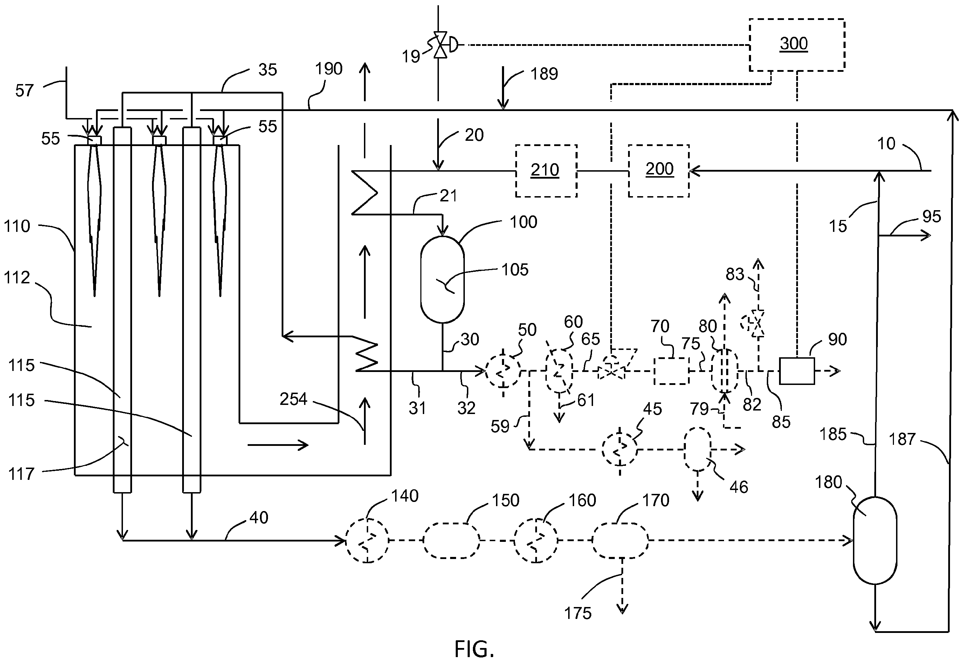

The figure is a process flow diagram of a steam-hydrocarbon reforming system for the present process.

DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity means one of (1) the first entity, (2) the second entity, and (3) the first entity and the second entity. The term "and/or" placed between the last two entities of a list of 3 or more entities means at least one of the entities in the list including any specific combination of entities in this list.

The term "plurality" means "two or more than two."

The phrase "at least a portion" means "a portion or all." The at least a portion of a stream may have the same composition with the same concentration of each of the species as the stream from which it is derived. As used herein a "divided portion" of a stream is a portion having the same chemical composition and species concentrations as the stream from which it was taken. The at least a portion of a stream may have a different concentration of species than that of the stream from which it is derived. The at least a portion of a stream may include only specific species of the stream from which it is derived. As used herein a "separated portion" of a stream is a portion having a different chemical composition and different species concentrations than the stream from which it was taken.

As used herein, "first," "second," "third," etc. are used to distinguish from among a plurality of steps and/or features, and is not indicative of the total number, or relative position in time and/or space unless expressly stated as such.

The term "depleted" means having a lesser mole % concentration of the indicated component than the original stream from which it was formed. "Depleted" does not mean that the stream is completely lacking the indicated component.

The terms "rich" or "enriched" means having a greater mole % concentration of the indicated component than the original stream from which it was formed.

The present invention relates to a process for reacting steam and one or more hydrocarbons to form a reformate in a system that utilizes at least two reforming reactors, e.g. a prereformer and a reformer furnace (primary furnace, catalytic steam methane reformer, etc.).

The present invention will be described with the aid of the sole figure showing a first reactor 100 and a second reactor 110.

The first reactor 100 may be a so-called "prereformer."

So-called "prereformers" are well-known in the art. A prereformer is a reactor containing catalyst 105 suitable for catalyzing the reforming reaction. Steam 20 and a feedstock 10 comprising one or more hydrocarbons are contacted with the catalyst 105 and reacted to a limited extent in the first reactor 100. Generally the higher hydrocarbons (e.g. C2+ hydrocarbons) are preferentially reacted compared to methane in the first reactor 100. The first reactor may be an adiabatic fixed bed reactor where heat is neither actively added nor removed. The first reactor may be a tubular reactor. The first reactor may be a convectively heated prereformer where the prereformer is heated by combustion product gases from the reformer furnace 110, reformate 40 from the reformer furnace 110, and/or steam from the process.

Catalyst 105 used in the first reactor 100 may be any suitable reforming catalyst known in the art for so-called "prereforming." Catalyst 105 may comprise at least one metal selected from a group consisting of nickel, cobalt, platinum, palladium, rhodium, ruthenium, iridium and mixtures thereof. A prereformer generally employs a different type of catalyst than the reformer furnace, for example a high activity, high nickel content catalyst.

Catalysts for prereforming are commercially available. Catalysts suitable for prereforming are discussed in patents US 4,105,591, US 3,882,636, US 3,988,425, GB 969,637, GB 1,150,066, and GB 1,155,843.

Since the articles "a" and "the" mean one or more, more than one prereformer and more than one catalyst may be used.

The process comprises passing feed stream 21 to the first reactor 100 containing catalyst 105 during a first period (i.e. from a time $t_1$ to a time $t_2$), reacting the feed stream 21 in the first reactor 100 in the presence of the catalyst 105 under reaction conditions sufficient to react the feed stream 21 and form an intermediate product stream 30, and withdrawing the intermediate product stream 30 from the first reactor 100. The intermediate product stream 30 comprises $H_2$, $CH_4$, $H_2O$, and $NH_3$, and may comprise one or more of C2+ hydrocarbons, CO, and $CO_2$.

Reaction conditions sufficient to react the feed stream include a temperature ranging from about 400°C to about 730°C and a pressure ranging from about 0.2 MPa to about 5.6 MPa.

The feed stream 21 comprises steam and hydrocarbons including $CH_4$ and C2+ hydrocarbons. C2+ hydrocarbons are hydrocarbons having 2 or more carbon atoms, e.g. ethane, ethene, propane, propene, butane, butene, etc. The concentration of the C2+ hydrocarbons in the feed stream 21 is not constant during the whole first period but changes during at least a portion of the first period (i.e. during the time from $t_1$ to the time $t_2$). The concentration of the C2+ hydrocarbons in the feed stream 21 may vary due to a change in the feedstock where the C2+ hydrocarbon concentration may vary widely, and/or variations in the composition of the particular feedstock used. The feed stream 21 has a molar flow rate of hydrocarbons, $F_{HC}$ and a molar flow rate of steam, $F_S$, thereby defining a ratio, $F_S/F_{HC}$, of the molar flow rate of steam to the molar flow rate of hydrocarbons in the feed stream 21.

Feed stream 21 is formed from a steam stream 20 and a feedstock stream 10.

Feedstock stream 10 may comprise one or more of natural gas, naphtha, refinery off-gas, or refinery fuel gas. The concentration of components in each of these possible feedstocks is known to vary thereby causing variability in the concentration of the C2+ hydrocarbons in the feed stream 21. The variability in the concentration of the C2+ hydrocarbons in the feed stream 21 can cause the reactions in the first reactor 100 to vary between endothermic and exothermic. This change in reaction character may impact the propensity for C2+ hydrocarbon slip through the first reactor 100.

The feedstock 10 for forming the feed stream 21 may be pretreated prior to being introduced into the prereformer 100. As shown in the figure, the feedstock may be pretreated in a hydrogenation unit 200 to convert olefins to their alkane counterparts and/or a hydrodesulphurization unit 210 to remove sulfur. Hydrogenation and hydrodesulphurization are well-known in the art.

As shown in the figure, hydrogen 15 may be mixed with the feedstock prior to introducing the feedstock 10 into the hydrogenation unit or the hydrodesulphurization unit. Hydrogen 15 is needed in the case of olefins in the hydrocarbon feedstock for reaction in the hydrogenation unit 200 to convert olefins to alkanes. Hydrogen 15 is needed in the case of sulfur in the hydrocarbon feedstock for reaction in the hydrodesulphurization unit 210 to form $H_2S$, which is typically removed by reaction with Zn in the hydrodesulphurization unit 210.

Hydrogen 15 may be supplied from any available source. As shown in the figure, hydrogen 15 may be conveniently supplied from a portion of a $H_2$ product stream from a separation unit 180 such as, for example, a pressure swing adsorber.

Steam 20 is mixed with the feedstock after optional pretreatment to form feed stream 21, which is typically called "mixed feed." The feed stream 21 may be heated by indirect heat transfer with combustion product gases from second reactor 110, for example in the convection section of a steam methane reformer.

The process comprises dividing the intermediate product stream 30 into a first portion 31 and a second portion 32. The intermediate product stream 30 may be divided during the whole first period or during intervals within the first period. The intermediate product stream 30 may be divided by any known means, for example a pipe "T", with flow rates of the first portion 31 and second portion 32 controlled by one or more valves (not shown).

The process comprises introducing a second reactor feed stream 35 comprising the first portion 31 of the intermediate product stream 30 into a second reactor 110, reacting the second reactor feed stream 35 in the second reactor 110 in the presence of a second catalyst 117 under reaction conditions sufficient to form a reformate 40 comprising $H_2$, CO, $CH_4$, and $H_2O$, and withdrawing the reformate 40 from the second reactor 110. The reformate 40 may comprise $CO_2$. And depending on the feedstock, the reformate may also comprise $N_2$.

The second reactor feed stream 35 may consist of the first portion 31 of the intermediate product stream 30.

The second reactor 110 may be any synthesis gas generation reactor known for producing synthesis gas.

The second reactor 110 may be a steam methane reformer (also called a primary reformer, catalytic steam-methane reformer, catalytic steam-hydrocarbon reformer, etc.). Steam methane reformers and their operation are well-known in the art.

The second reactor may be a mixed conducting membrane reactor as disclosed, for example, in U.S. 6,110,979, incorporated herein by reference.

The second catalyst 117 may be a reforming catalyst. The reforming catalyst may be any suitable reforming catalyst known in the art.

The reaction conditions in the second reactor 110 may include a temperature ranging from 500°C to 1000°C and a pressure ranging from 0.2 MPa (2 atm.) to 5.6 MPa (55 atm.).

The second reactor 110 may comprise a plurality of catalyst-containing reformer tubes 115. The second reactor feed stream 35 may be introduced into the plurality of catalyst-containing reformer tubes 115 in the second reactor. The second reactor feed stream 35 may be reacted in the plurality of catalyst-containing reformer tubes 115 and the reformate 40 withdrawn from the plurality of catalyst-containing reformer tubes 115.

The process may further comprise combusting a fuel 190 with an oxidant gas 57 in a combustion section 112 of the second reactor 110 external to the plurality of catalyst-containing reformer tubes 115 under conditions sufficient to combust the fuel 190 to form a combustion product gas 254 and generate heat to supply energy for reacting the second reactor feed stream 35 inside the plurality of catalyst-containing reformer tubes 115, and withdrawing the combustion product gas 254 from the combustion section 112.

The fuel 190 and oxidant gas 57 may be introduced into the combustion section of the reformer furnace using burners 55. Any suitable fuel 190 known in the art may be used. Typically the oxidant gas 57 is air. The air may be heated (not shown), for example, by heat exchange with steam, the combustion product gas 254 in the convection section of the reformer furnace, and/or by the reformate stream from the steam-hydrocarbon reformer. The fuel may also be heated (not shown), for example by heat exchange with a steam stream, the combustion product gas 254 in the convection section of the reformer furnace and/or by the reformate stream from the steam-hydrocarbon reformer.

Conditions sufficient to combust the fuel 190 may include any suitable temperature range and pressure range, for example, a temperature ranging from 600°C to 1500°C and a pressure ranging from 98 kPa to 102 kPa (absolute). The temperature corresponds to the furnace temperature, not the flame temperature.

The process comprises conditioning the second portion 32 to remove at least water and ammonia and form a conditioned portion 85 of the second portion 32 of the intermediate product stream 30. While it may be desirable to remove all of the water and all of the ammonia, complete removal may not be possible and is not required. As used herein "to remove at least water and ammonia" does not mean complete removal of water and ammonial, but rather that some water and some ammonia are removed. Preferably substantially all of the water and substantially all of the ammonia is removed from the second portion 32 to form the conditioned portion 85. Removal of ammonia by conditioning may result in an ammonia content in the conditioned portion that is less than 100 ppmv, or less than 50 ppmv, or less than 5 ppmv, or less than 1 ppmv. Removal of water by conditioning may result in a water content in the conditioned portion that is less than 1 vol. %, or less than 0.3 vol. %, or less than 0.2 vol. %, or less than 0.1 vol. %.

The step of conditioning may comprise removing water from the second portion 32 of the intermediate product stream 30 by condensation to form a water-depleted portion 65 of the second portion 32 of the intermediate product stream 30. The step of removing water may comprise cooling the second portion 32 in a heat exchanger 50 to condense water from the second portion 32 and separating the liquid water-enriched portion (condensate) 59 from the second portion 32 to form the water-depleted portion 65. Since ammonia is soluble in liquid water, some of the ammonia present in the second portion 32 is removed with the liquid water-enriched portion 59. Heat exchanger 50 may be an ambient air-cooled heat exchanger.

The water-depleted portion 65 and the liquid water-enriched portion 59 may be divided where the water-depleted portion 65 has a time-averaged mass flow rate $F_1$, and the liquid water-enriched portion 59 has a time-averaged mass flow rate, $F_2$.

Time-averaged mass flow rates are calculated in the conventional way from the generalized equation:

$$\overline{\xi} = \frac{1}{\tau} \int_{t_1}^{t_2} \xi(t)dt$$

where $\overline{\xi}$ is the time-averaged mass flow rate, $\xi$ is the instantaneous mass flow rate, $t$ is time, where the specified quantity (i.e. first, second, third, etc.) flows from $t = t_1$ to $t = t_2$, where $t = t_1$ at the beginning of the flow of the specified quantity, $t = t_2$ at the end of the flow of the specified quantity, and where $\tau = t_2 - t_1$.

The time-averaged mass flow rates $F_1$ and $F_2$ may be controlled such that $\dfrac{F_1}{F_1 + F_2} \leq 0.2$ where $F_1$ is nonzero. This means that only a reduced fraction of the original stream is used and further processed for later measurements in a chemical component analyzer 90 such as, for example, a gas chromatograph. This allows for a larger flow rate of the sample passing from the source to the first heat exchanger 50 which has the advantages of decreasing the risk of condensation in the conduit from the source, increasing the sample response speed by decreasing the residence time of the sample gas from the source to the conditioning system and gas chromatograph 90. This also has the advantage of concentrating the hydrocarbon components.

The liquid water-enriched portion 59 may be further cooled in a heat exchanger 45 with water separated in liquid trap 46. The vapor portion from the liquid trap may be vented, flared, or combusted in the combustion section of the reformer furnace. The water portion from the liquid trap 46 may be optionally treated and recycled or disposed of as desired.

The step of removing water from the second portion 32 of the intermediate product stream 30 may comprise further cooling of the second portion 32 in a second heat exchanger 60 to condense more water from the second portion 32 and separating the condensate portion 61 from the second portion 32 to form the water-depleted portion 65. The second heat exchanger 60 may be a chiller that cools the second portion 32 to a temperature ranging from 0°C to 10°C or from 2°C to 7°C.

The two-stage condensation in the first heat exchanger 50 and second heat exchanger 60 addresses the problem related to the high water content in reformate streams. Unexpectedly, the water removal does not appreciably affect the concentration of the C2+ hydrocarbons in the second portion 32.

The step of conditioning may also comprise removing ammonia from the water-depleted portion 65 of the second portion 32 of the intermediate product stream 30 thereby forming an ammonia-depleted portion 75 of the second portion 32 of the intermediate product stream 30.

The ammonia may be removed by any known means. The ammonia may, for example, be removed by chemical reaction with a scrubber media in ammonia scrubber 70. Any scrubber media known to remove ammonia may be used. The ammonia scrubber media may comprise phosphoric acid. The ammonia scrubber 70 may be, for example, an AS™-Series Ammonia Scrubber commercially available from Perma Pure, LLC.

The step of conditioning may also comprise passing the ammonia-depleted portion 75 to a dryer 80 to further remove water and form a dried portion 82 of the intermediate product stream 30. Any suitable dryer may be used. As discussed above, the dried portion may contain residual amounts of water.

The dryer 80 may be a membrane dryer. The dryer 80 may be a PRISM® Membrane Dryer commercially available from Air Products and Chemicals, Inc. or a membrane dryer commercially available from Perma Pure. A dry nitrogen stream 79 may be used in the membrane dryer as a purge gas to facilitate removing water from the ammonia depleted portion 75.

The conditioned portion 85 of the second portion 32 of the intermediate product stream 30 comprises at least a portion of the dried portion 82. The conditioned portion 85 may consist of at least a portion of the dried portion 82. The dried portion 82 may be divided into a vented portion 83 and the conditioned portion 85 that is sampled in the chemical component analyzer 90. The conditioned portion 85 may be a small fraction of the dried portion 82, for example, less than 5 mass %, or less than 1 mass % of the dried portion 82. The vented portion may be flared, if desired, or introduced at any suitable location in the reforming system, for example in the combustion space of the reformer furnace 110. By providing venting of the vented portion 83, the conditioning system can be operated continuously, while sampling of the stream done only intermittently. The advantage of this is to prevent water from condensing in undesirable locations in the conditioning system or feed lines to the conditioning system.

The dried portion 82 may be a small fraction of the total second portion 32 formed when dividing the intermediate product stream 30. The second portion 32 of the intermediate product stream 30 may have a non-zero mass flow rate, $M_1$, and the dried portion 82 may have a non-zero mass flow rate, $M_d$, and $M_d$ may be less than or equal to $0.20M_1$. The advantage of maintaining a larger mass flow rate of the second portion 32 is that condensation of water in the conduit feeding the conditioning system can be more easily prevented.

The process comprises measuring a C2+ hydrocarbon content in the conditioned portion 85 of the second portion 32 of the intermediate product stream 30 in a chemical component analyzer 90. The chemical component analyzer 90 may be a gas chromatograph (GC). The chemical component analyzer 90 may be a mass spectrometer. The chemical component analyzer 90 may be a non-methane hydrocarbon analyzer, which uses a flame ionization detector, for example, as available from Baseline - MOCON, Inc. The chemical component analyzer 90 may be a tunable diode laser analyzer, for example, as available from Yokogawa. The C2+ hydrocarbon content may be, for example, a concentration of C2+ hydrocarbons, or a ratio with one of the other components in the conditioned portion 85.

The chemical component analyzer 90 may be in signal communication with a controller 300. The controller 300 may be any computer, PLC, or the like that is capable of sending and/or receiving electronic signals from the chemical component analyzer 90. The controller 300 may send signals to the chemical component analyzer 90 to instruct the chemical component analyzer 90 to take in a sample and measure the sample. The controller 300 may receive signals from the chemical component analyzer 90 that characterize the C2+ hydrocarbon content.

The ratio of the molar flow rate of steam to the molar flow rate of hydrocarbons in the feed stream 21 is adjusted responsive to the step of measuring the C2+ hydrocarbon content in the conditioned portion 85 of the second portion 32 of the intermediate product stream 30 during the first period. The C2+ hydrocarbon content in the conditioned portion 85 may vary due to the variability in the concentration of the C2+ hydrocarbons in the feed stream 21 and/or changes in the prereformer catalyst activity.

When the measured C2+ hydrocarbon content equals or exceeds an upper target C2+ hydrocarbon content, the ratio of the molar flow rate of steam to the molar flow rate of hydrocarbons is caused to be increased. When the measured C2+ hydrocarbon content equals or drops below a lower target C2+ hydrocarbon content, the ratio of the molar flow rate of steam to the molar flow rate of hydrocarbons is caused to be decreased. The ratio of the molar flow rate of steam to the molar flow rate of hydrocarbons may be caused to increase or decrease by manual manipulation of one or more valves or using automatic control using controller 300. For example, controller 300 may be in signal communication with valve 19 and able to control the opening and closing of valve 19 to adjust the flow rate of steam 20.

The lower target may be zero. It may be desirable to control the steam flow rate to achieve a C2+ hydrocarbon content that is nearly zero.

By changing the steam flow rate responsive to the measured C2+ hydrocarbon concentration in the conditioned portion 85 of the second portion 32 of the intermediate product stream 30, the present process satisfies industry's desire to process feed having varying C2+ hydrocarbon concentration with improved energy efficiency while reducing the propensity for carbon formation in the second reactor 110 (i.e. the primary synthesis generation reactor). The present process achieves these desires independent of changes of the catalyst activity in the first reactor 100 (i.e. the prereformer).

The present process is also useful for monitoring decreased activity of the catalyst 105 in the first reactor 100. The activity of the catalyst may be decreased, for example, due to catalyst poisoning and/or catalyst sintering.

Since the character (endothermic/exothermic) of the reaction in the first reactor 100 may be impacted by the concentration of C2+ hydrocarbons in the feed, monitoring the catalyst performance via temperature profile monitoring may be problematic.

The process may further comprise monitoring the C2+ hydrocarbon content as a function of the molar flow rate of steam and the molar flow rate of hydrocarbons, and assessing whether to replace the catalyst 105 in the first reactor 100 responsive to the step of monitoring.

To compensate for decreased activity of the catalyst, the molar flow rate of steam will be increased for a given feedstock to maintain the C2+ hydrocarbon content below the upper target C2+ hydrocarbon content. The energy efficiency of the process decreases as the molar flow rate of steam increases. The decision to replace the catalyst depends on the economics of continuing to operate the process with the degraded efficiency compared to the cost of replacing the catalyst.

In case the economics favor replacing the catalyst 105, the process may further comprise replacing the catalyst 105 in the first reactor 100 responsive to the step of assessing whether to replace the catalyst 105 in the first reactor 100. The catalyst 105 is then replaced during a second time period after the first time period (i.e. from a time $t_3$ to a time $t_4$, where $t_3$ is after $t_2$).

In addition or alternatively, the activity of the catalyst 105 can be evaluated by comparing a response to changes in the molar flow rate of steam. For example, if an increase in the molar flow rate of steam does not produce an expected or desired change in the C2+ hydrocarbon content, one can assess the decrease in the catalyst activity.

The process may further comprise evaluating the activity of the catalyst 105 in the first reactor 100 by assessing the response of the measured C2+ hydrocarbon content to the step of increasing the ratio of the molar flow rate of steam to the molar flow rate of hydrocarbons in the feed stream 21. The measured C2+ hydrocarbon content may be compared with an allowable content value representative for the C2+ hydrocarbon content in the conditioned portion at the increased ratio of the molar flow rate of steam to the molar flow rate of hydrocarbons.

In case the economics favor replacing the catalyst 105, the process may further comprise replacing the catalyst 105 in the first reactor 100 responsive to the step of evaluating the activity of the catalyst 105 in the first reactor 100. The catalyst 105 is then replaced during a second time period after the first time period (i.e. from a time $t_3$ to a time $t_4$, where $t_3$ is after $t_2$).

The reformate 40 may be used to generate steam in a waste heat boiler 140 by indirect heat transfer. At least a portion of the steam generated in the waste heat boiler 140 may be used as steam 20 in the process feed.

The reformate 40 may be further processed in one or more shift reactors 150 if desired.

The reformate 40 may be cooled in a heat exchanger 160 to condense water from the reformate 40. Water 175 may be removed from the reformate 40 in a knock-out drum 170.

Carbon dioxide may be removed from the reformate 40 in a $CO_2$ stripper or other $CO_2$ removal unit (not shown), if desired.

The process may further comprise passing at least a portion of the reformate 40 to a separation unit 180 to form a hydrogen-containing product 185 and a by-product gas (tail gas) 187. The separation unit 180 may be a pressure swing adsorber. A portion 95 of the hydrogen-containing product 185 may be exported from the process. Another portion 15 may be recycled to the first reactor 100 in feed stream 21. The $H_2$ may be recycled to the first reactor 100 by way of the hydrodesulphurization unit 200 and/or the hydrogenation unit 210.

The by-product gas 187 may be used as a fuel in the second reactor 110. The by-product gas may be blended with make-up fuel 189 and passed to burners 55 where the by-product gas and make up fuel are combusted with an oxygen-containing gas 57 external to a plurality of catalyst-containing tubes 115.

The separation unit 180 may be a cryogenic separation unit. The process may further comprise passing at least a portion of the product stream 40 from the second reactor 110 to a cryogenic separation unit to form at least one of a CO product stream, a $H_2$ product stream, and an oxogas product. An oxogas is a mixture of CO and $H_2$ having a desired CO:$H_2$ molar ratio. A portion 15 of the $H_2$ product stream may be passed to the first reactor 100 thereby providing at least a portion of the $H_2$ in the mixture.

## Claims

1. A steam-hydrocarbon reforming process comprising:

passing a feed stream (21) to a first reactor (100) containing a catalyst (105) during a first period, reacting the feed stream (21) in the first reactor (100) in the presence of the catalyst (105) under reaction conditions sufficient to react the feed stream (21) and form an intermediate product stream (30), and withdrawing the intermediate product stream (30) from the first reactor (100); wherein the feed stream (21) comprises steam and hydrocarbons including C2+ hydrocarbons, wherein the concentration of the C2+ hydrocarbons in the feed stream (21) varies during the first period;

wherein the feed stream (21) has a molar flow rate of hydrocarbons, $F_{HC}$; and wherein the feed stream (21) has a molar flow rate of steam, $F_S$, thereby defining a ratio, $F_S/F_{HC}$, of the molar flow rate of steam to the molar flow rate of hydrocarbons in the feed stream (21);

introducing a second reactor feed stream (35) comprising at least a portion (31) of the intermediate product stream (30) into a second reactor (110), reacting the second reactor feed stream (35) in the second reactor (110) in the presence of a second catalyst (117) under reaction conditions effective to form a reformate (40) comprising $H_2$, CO, $CH_4$, and $H_2O$, and withdrawing the reformate (40) from the second reactor (110);

**characterized by**

dividing the intermediate product stream (30) into a first portion (31) and a second portion (32)), the second portion (32) of the intermediate product stream (30) having a mass flow rate, $M_1$;

introducing the second reactor feed stream (35) comprising the first portion (31) as the at least a portion (31) of the intermediate product stream (30) into the second reactor (110);

conditioning the second portion (32) by removing at least water and ammonia to form a conditioned portion (85) of the second portion (32) of the intermediate product stream (30);

measuring a C2+ hydrocarbon content in the conditioned portion (85) of the second portion (32) of the intermediate product stream (30) in a chemical component analyzer (90);

increasing the ratio of the molar flow rate of steam to the molar flow rate of hydrocarbons in the feed stream (21) responsive to the step of measuring the C2+ hydrocarbon content when the C2+ hydrocarbon content equals or exceeds an upper target C2+ hydrocarbon content during the first period; and

decreasing the ratio of the molar flow rate of steam to the molar flow rate of hydrocarbons in the feed stream (21) responsive to the step of measuring the C2+ hydrocarbon content when the C2+ hydrocarbon content equals or drops below a lower target C2+ hydrocarbon content during the first period.

2. The process of claim 1 wherein the second reactor feed stream (35) is introduced into a plurality of catalyst-containing reformer tubes (115) in the second reactor (110), and wherein the reformate (40) is withdrawn from the plurality of catalyst-containing reformer tubes (115), the process further comprising:

  combusting a fuel (190) with an oxidant gas (57) in a combustion section (112) of the second reactor (110) external to the plurality of catalyst-containing reformer tubes (115) under conditions effective to combust the fuel (190) to form a combustion product gas (254) and generate heat to supply energy for reacting the second reactor feed stream (35) inside the plurality of catalyst-containing reformer tubes (115), and withdrawing the combustion product gas (254) from the combustion section (112).

3. The process of claim 1 or claim 2 wherein the step of conditioning comprises:

  removing water from the second portion (32) of the intermediate product stream (30) by condensation to form a water-depleted portion (65) of the second portion (32) of the intermediate product stream (30);

  removing ammonia from the water-depleted portion (65) of the second portion (32) of the intermediate product stream (30) thereby forming an ammonia-depleted portion (75) of the second portion (32) of the intermediate product stream (30); and

  passing the ammonia-depleted portion (75) to a dryer (80) to remove water and form a dried portion (82) of the second portion (32) of the intermediate product stream (30), the dried portion (82) of the second portion (32) having a mass flow rate, $M_d$;

  wherein the conditioned portion (85) of the second portion (32) of the intermediate product stream (30) comprises at least a portion of the dried portion (82).

4. The process of claim 3 wherein the dryer (80) is a membrane dryer.

5. The process of claim 3 or claim 4 wherein $M_d \leq 0.20 \times M_1$.

6. The process of any one of the preceeding claims wherein the chemical component analyzer is a gas chromatograph.

7. The process of any one of the preceding claims further comprising:

  separating the reformate (40) by pressure swing adsorption to produce a hydrogen-containing product (185) and a by-product gas (187).

8. The process of claim 7 further comprising:

  pretreating a feedstock (10) comprising hydrocarbons including C2+ hydrocarbons by hydrogenation and/or hydrodesulphurization; and
  mixing steam (20) with the pretreated feedstock to form the feed stream (21) to the first reactor (100); and, optionally,
supplying at least a portion (15) of the hydrogen-containing product (185) for the pretreatment of the feedstock (10).

9. The process of any one of the preceding claims further comprising:

increasing the ratio of the molar flow rate of steam to the molar flow rate of hydrocarbons in the feed stream (21) responsive to the step of measuring the C2+ hydrocarbon content;
measuring the C2+ hydrocarbon content in the conditioned portion (85) while reacting the feed stream (21) with the increased ratio in the first reactor (100);
comparing the measured C2+ hydrocarbon content with an allowable content value representative for the C2+ hydrocarbon content in the conditioned portion (85) at the increased ratio of the molar flow rate of steam to the molar flow rate of hydrocarbons; and
replacing the catalyst (105) in the first reactor (100) if the measured C2+ hydrocarbon content is greater than the allowable content value.

10. The process of any one of the preceding claims wherein the step of conditioning comprises:

cooling the second portion (32) in a heat exchanger (50) of the intermediate product stream (30) to condense water from the second portion (32) thereby forming a liquid fraction and a vapor fraction;
dividing the cooled second portion (32) into a water-depleted vapor fraction-enriched portion (65) having a time-averaged mass flow rate, $F_1$, and a liquid fraction-enriched portion (59) having a time-averaged mass flow rate, $F_2$; and
removing at least water and ammonia from the water-depleted vapor fraction-enriched portion (65) to form the conditioned portion (85);
wherein $F_1$ and $F_2$ are controlled such that

$$0 < \frac{F_1}{F_1 + F_2} \leq 0.2 .$$

11. The process of any one of the preceding claims wherein control of the ratio ($F_S/F_{HC}$) of the molar flow rate of steam to the molar flow rate of hydrocarbons in the feed stream (21) is based primarily or solely on the measured C2+ hydrocarbon content in the conditioned portion (85).

12. The process of any one of the preceding claims wherein the C2+ hydrocarbon content is either a concentration of C2+ hydrocarbons in the conditioned portion (85) of the second portion (32) of the intermediate product stream (30) or a ratio of the C2+ hydrocarbon content and a measured $H_2$, CO or $CH_4$ content in the conditioned portion (85).

**Patentansprüche**

1. Dampf-Kohlenwasserstoff Reformverfahren, mit den Schritten:

- Leiten eines Zustroms (21) zum einem ersten Reaktor (100), der während einer ersten Periode einen Katalysator (105) enthält, Reagieren des Zustroms (21) in dem ersten Reaktor (100) in der Anwesenheit des Katalysators (105) unter Reaktionsbedingungen, die ausreichend sind, den Zustrom (21) zu reagieren und einen Zwischenproduktstrom (30) zu formen, und
- Entziehen des Zwischenproduktstroms (30) aus dem ersten Reaktor (100);
- wobei der Zustrom (21) Dampf und Kohlenwasserstoffe mit C2+ Kohlenwasserstoffe umfasst, wobei die Konzentration der C2+ Kohlenwasserstoffe in dem Zustrom (21) während der ersten Periode variiert;
- wobei der Zustrom (21) eine molare Flussrate von Kohlenwasserstoffen, $F_{HC}$ hat; und
- wobei der Zustrom (21) eine molare Flussrate von Dampf, $F_S$, hat und dabei ein Verhältnis $F_S/F_{HC}$ der molaren Flussrate des Dampfs zu der molaren Flussrate der Kohlenwasserstoffe in dem Zustrom (21) definiert;
- Einführen eines zweiten Reaktorzustroms (35), der wenigstens einen Teil (31) des Zwischenproduktstroms (30) umfasst, in einen zweiten Reaktor (110), Reagieren des zweiten Reaktorzustroms (35) in dem zweiten Reaktor (110) in Anwesenheit eines zweiten Katalysators (117) unter Reaktionsbedingungen wirksam ein Reformat (40) zu bilden, das $H_2$, CO, $CH_4$ und $H_2O$ umfasst, und Entziehen des Reformats (40) aus dem zweiten Reaktor (110);

**gekennzeichnet durch**

- Teilen des Zwischenproduktstroms (30) in einen ersten Teil (31) und einen zweiten Teil (32), wobei der zweite Teil (32) des Zwischenproduktstroms (30) eine Massenstrom , $M_1$, hat;
- Einführen des zweiten Reaktorzustroms (35), der den ersten Teil (31) als wenigstens einen Teil (31) des Zwischenproduktstroms (30) umfasst, in den Reaktor (110);
- Konditionieren des zweiten Teils (32) durch Entziehen von zumindest Wasser und Ammoniak, um einen konditionierten Teil (85) des zweiten Teils (32) des Zwischenproduktstroms (30) zu bilden;

- Messen eines C2+ Kohlenwasserstoff Anteils in dem konditionierten Teil (85) des zweiten Teils (32) des Zwischenproduktstroms (30) in einem chemischen Komponentenanalysator (90);
- Vergrößern des Anteils der molaren Dampfflussrate im Verhältnis zu der molaren Flussrate der Kohlenwasserstoffe in dem Zustrom (21) in Reaktion auf den Schritt des Messens des C2+ Kohlenwasserstoffanteils, wenn der C2+ Kohlenwasserstoffanteil während der ersten Periode gleich einer oberen C2+ Kohlenwasserstoffanteilzielvorgabe ist oder eine obere C2+ Kohlenwasserstoffanteilzielvorgabe überschreitet;
- Verkleinern des Anteils der molaren Dampfflussrate im Verhältnis zu der molaren Flussrate der Kohlenwasserstoffe in dem Zustrom (21) in Reaktion auf den Schritt des Messens des C2+ Kohlenwasserstoffanteils, wenn der C2+ Kohlenwasserstoffanteil gleich ist oder unter eine untere C2+ Kohlenwasserstoffanteilzielvorgabe während der ersten Periode fällt.

2. Verfahren nach Anspruch 1, wobei der zweite Reaktorzustrom (35) in eine Vielzahl von Katalysator enthaltenden Reformerröhren (115) in dem zweiten Reaktor (110) eingeführt wird, und wobei das Reformat (40) aus der Vielzahl der Katalysatoren enthaltenden Reformerröhren (115) entzogen wird, das Verfahren weiterhin umfassend:

- Verbrennen eines Treibstoffs (190) mit einem Oxidansgas (57) in einer Verbrennungsbereich (112) des zweiten Reaktors (110) außerhalb der Katalysatoren enthaltenden Vielzahl von Reformerröhren (115) unter Bedingungen, die zur Verbrennung des Brennstoffs (190) geeignet sind, um ein Verbrennungsproduktgas (254) zu bilden und Wärme zu generieren, um Energie zur Reaktion des zweiten Reaktorzustroms (35) innerhalb der Vielzahl von Katalysatoren enthaltenden Reformerröhren (115) zur Verfügung zu stellen, und Entziehen des Verbrennungsproduktgases (254) aus dem Verbrennungsbereich (112).

3. Das Verfahren nach Anspruch 1 oder Anspruch 2, wobei der Schritt der Konditionierung umfasst:

- Entfernen von Wasser aus dem zweiten Teil (32) des Zwischenproduktstroms (30) durch Kondensation, um einen wasserabgereicherten Teil (65) des zweiten Teils (32) des Zwischenproduktstroms (30) zu bilden;
- Entfernen von Ammoniak aus dem wasserabgereicherten Teil (65) des zweiten Teils (32) des Zwischenproduktstroms (30), und dadurch einen ammoniakabgereicherten Teil (75) des zweiten Teils (32) des Zwischenproduktstroms (30) zu bilden;
- Leiten des ammoniakabgereicherten Teils (75) zu einem Trockner (80) um Wasser zu entfernen und einen getrockneten Teil (82) des zweiten Teils (32) des Zwischenproduktstroms (30) zu bilden, wobei der getrocknete Teil (82) eine Massenflussrate $M_d$ hat;
- wobei der konditionierte Teil (85) des zweiten Teils (32) des Zwischenproduktstroms (3) zumindest einen Teil des getrockneten Teils (82) umfasst.

4. Verfahren nach Anspruch 3, wobei der Trockner (80) ein Membrantrockner ist.

5. Verfahren nach Anspruch 3 oder Anspruch 4, wobei $M_d \leq 0.20$ x $M_1$ ist.

6. Verfahren nach einem der vorhergehenden Ansprüche, wobei der chemische Komponentenanalyser eine Gaschromatograph ist.

7. Verfahren nach einem der vorhergehenden Ansprüche weiterhin umfassend:

- Trennen des Reformats (40) durch Druckwechseladsorption, um ein Wasserstoff enthaltendes Produkt (185) und ein Nebenproduktgas (187) zu erzeugen.

8. Verfahren nach Anspruch 7 weiterhin umfassend:

- Vorbehandeln eines Ausgangsprodukts (10), das Wasserkohlenstoffe einschließlich C2+ Wasserkohlenstoff enthält, durch Hydrogenierung und/oder Wasserstoffentschwefelung; und
- Mischen von Dampf (20) mit dem vorbehandelten Ausgangsprodukt um den Zustrom (21) zu dem ersten Reaktor (100) zu bilden; und optional
- Bereitstellen wenigstens eines Teils (15) des den Wasserstoff enthaltenden Produkts (185) für die Vorbehandlung des Ausgangsprodukts (10).

9. Verfahren nach einem der vorhergehenden Ansprüche weiterhin umfassend:

- Erhöhen des Anteils der molaren Flussrate des Dampfs zu der molaren Flussrate der Kohlenwasserstoffe in dem Zustrom (21) in Reaktion auf den Schritt des Messens des C2+ Kohlenwasserstoffanteils;
- Messen des C2+ Kohlenwasserstoffanteils in dem konditionierten Teil (85) während der Zustrom (21) mit dem erhöhten Anteil in dem ersten Reaktor (100) reagiert wird;

- Vergleichen des gemessenen C2+ Kohlenwasserstoffanteils mit einem erlaubbaren repräsentativen Anteilswert für den CO+ Kohlenwasserstoffanteil in dem konditionierten Teil (85) bei einem erhöhten Anteil der molaren Flussrate des Dampfs zu der molaren Flussrate der Kohlenwasserstoffe; und

- Ersetzen des Katalysators (105) in dem ersten Reaktor (100) wenn der gemessene C2+ Kohlenwasserstoffanteil größer ist, als der erlaubbare Anteilswert.

**10.** Verfahren nach einem der vorhergehenden Ansprüche, wobei der Schritt des Konditionierens umfasst:

- Abkühlen des zweiten Teils (32) in einem Wärmetauscher (50) des Zwischenproduktstroms (30) um Wasser aus dem zweiten Teil (32) zu kondensieren und dabei einen flüssigen Anteil und einen Dampfanteil zu bilden;

- Teilen des gekühlten zweiten Teils (32) in einen wasserabgereicherten dampfanteilangereicherten Teil (65) mit einer zeitgemittelten Massenflussrate $F_1$ und einem flüssichkeitsanteilangereicherten Teil (59) mit einer zeitgemittelten Massenflussrate $F_2$; und

- Entfernen von zumindest Wasser und Ammoniak aus dem wasserabgereicherten dampfanteilangereicherten Teil (65) um den konditionierten Teil (85) zu bilden;

- wobei $F_1$ und $F_2$ kontrolliert werden, so dass

$$0 < \frac{F_1}{F_1 + F_2} \leq 0.2.$$

**11.** Verfahren nach einem der vorhergehenden Ansprüche, wobei eine Kontrolle des Verhältnisses ($F_S/F_{HC}$) der molaren Flussrate des Dampfs zu der molaren Flussrate der Kohlenwasserstoffe in dem Zustrom (21) in erster Linie oder ausschließlich auf dem gemessenen CO+ Kohlenwasserstoffanteil in dem konditioniertem Teil (85) basiert ist.

**12.** Verfahren nach einem der vorhergehenden Ansprüche, wobei der CO+ Kohlenwasserstoffanteil entweder ein Konzentration von C2+ Kohlenwasserstoffen in dem konditionierten Teil (85) des zweiten Teils (32) des Zwischenproduktstroms (30) ist oder ein Verhältnis des C2+ Kohlenwasserstoffanteils und einem gemessenen Anteil an $H_2$, CO oder $CH_4$ in dem konditionierten Teil (85).

**Revendications**

**1.** Un procédé de reformage d'hydrocarbures à la vapeur comprenant :

l'acheminement d'un courant d'alimentation (21) à un premier réacteur (100) contenant un catalyseur (105) durant une première période, la mise en réaction du courant d'alimentation (21) dans le premier réacteur (100) en présence du catalyseur (105) dans des conditions de réaction appropriées pour faire réagir le courant d'alimentation (21) et former un courant de produit intermédiaire (30), et le retrait du courant de produit intermédiaire (30) du premier réacteur (100) ;

dans lequel le courant d'alimentation (21) comprend de la vapeur et des hydrocarbures incluant des hydrocarbures C2+, la concentration d'hydrocarbures C2+ dans le courant d'alimentation (21) variant durant la première période ;
dans lequel le courant d'alimentation (21) a un débit molaire d'hydrocarbures, $F_{HC}$ ; et
dans lequel le courant d'alimentation (21) a un débit molaire de vapeur, $F_S$, en définissant ainsi un rapport, $F_S/F_{HC}$, entre le débit molaire de la vapeur et le débit molaire d'hydrocarbures dans le courant d'alimentation (21) ;

l'introduction d'un courant d'alimentation d'un second réacteur (35) comprenant au moins une portion (31) du courant de produit intermédiaire (30) dans un second réacteur (110), la mise en réaction du courant d'alimentation du second réacteur (35) dans le second réacteur (110) en présence d'un second catalyseur (117) dans des conditions de réaction appropriées pour former un reformat (40) comprenant $H_2$, CO, $CH_4$ et $H_2O$, et le retrait du reformat (40) du second réacteur (110) ;
**caractérisé par**
la division du courant de produit intermédiaire (30) en une première portion (31) et une seconde portion (32), la seconde portion (32) du courant de produit intermédiaire (30) ayant un débit massique, $M_1$ ;
l'introduction du courant d'alimentation du second réacteur (35) comprenant la première portion (31) en tant que la au moins une portion (31) du courant de produit intermédiaire (30) dans le second réacteur (110) ;
le conditionnement de la seconde portion (32) en éliminant au moins l'eau et l'ammoniac pour former une portion conditionnée (85) de la seconde portion (32) du courant de produit intermédiaire (30) ;
la mesure du contenu en hydrocarbures C2+ dans la portion conditionnée (85) de la seconde portion (32) du courant de produit intermédiaire (30) dans un analyseur de composants chimiques (90) ;

l'augmentation du rapport entre le débit molaire de la vapeur et le débit molaire d'hydrocarbures dans le courant d'alimentation (21) en réponse à l'étape de mesure du contenu en hydrocarbures C2+ si le contenu en hydrocarbures C2+ égale ou excède un contenu en hydrocarbures C2+ cible supérieur durant la première période ; et

la diminution du rapport entre le débit molaire de la vapeur et le débit molaire d'hydrocarbures dans le courant d'alimentation (21) en réponse à l'étape de mesure du contenu en hydrocarbures C2+ si le contenu en hydrocarbures C2+ égale ou tombe sous un contenu en hydrocarbures C2+ cible inférieur durant la première période.

2. Le procédé de la revendication 1, dans lequel le courant d'alimentation du second réacteur (35) est introduit dans plusieurs tubes de reformeur (115) contenant un catalyseur dans le second réacteur (110), et dans lequel le reformat (40) est retiré des plusieurs tubes de reformeur contenant un catalyseur (115), le procédé comprenant en outre :

La combustion d'un combustible (190) avec un gaz oxydant (57) dans une section de combustion (112) du second réacteur (110) externe aux plusieurs tubes de reformeur contenant un catalyseur (115), dans des conditions appropriées pour brûler le combustible (190) pour former un gaz de produit de combustion (254) et générer de la chaleur pour fournir de l'énergie pour la mise en réaction du courant d'alimentation du second réacteur (35) à l'intérieur des plusieurs tubes de reformeur contenant un catalyseur (115), et le retrait du gaz de produit de combustion (254) de la section de combustion (112).

3. Le procédé de la revendication 1 ou de la revendication 2, dans lequel l'étape de conditionnement comprend :

l'élimination d'eau de la seconde portion (32) du courant de produit intermédiaire (30) par condensation pour former une portion appauvrie en eau (65) de la seconde portion (32) du courant de produit intermédiaire (30) ;

l'élimination d'ammoniac de la portion appauvrie en eau (65) de la seconde portion (32) du courant de produit intermédiaire (30), en formant ainsi une portion appauvrie en ammoniac (75) de la seconde portion (32) du courant de produit intermédiaire (30) ; et

l'acheminement de la portion appauvrie en ammoniac (75) à un séchoir (80) pour éliminer l'eau et former une portion séchée (82) de la seconde portion (32) du courant de produit intermédiaire (30), la portion séchée (82) de la seconde portion (32) ayant un débit massique, $M_d$;

dans lequel la portion conditionnée (85) de la seconde portion (32) du courant de produit intermédiaire (30) comprend au moins une portion de la portion séchée (82).

4. Le procédé de la revendication 3, dans lequel le séchoir (80) est un séchoir à membrane.

5. Le procédé de la revendication 3 ou 4, dans lequel $M_d \leq 0,20 \times M_1$.

6. Le procédé de n'importe laquelle des revendications précédentes, dans lequel l'analyseur de composants chimiques est un chromatographe gazeux.

7. Le procédé de n'importe laquelle des revendications précédentes comprenant en outre :

la séparation du reformat (40) par adsorption par inversion de pression pour produire un produit contenant de l'hydrogène (185) et un gaz de produit dérivé (187).

8. Le procédé de la revendication 7 comprenant en outre :

le prétraitement d'une charge d'alimentation (10) comprenant des hydrocarbures incluant des hydrocarbures C2+, par hydrogénation et/ou hydrodésulfuration ; et

le mélange de la vapeur (20) avec la charge d'alimentation prétraitée pour former le courant d'alimentation (21) du premier réacteur (100); et, facultativement,

la fourniture d'au moins une portion (15) du produit contenant de l'hydrogène (185) pour le prétraitement de la charge d'alimentation (10).

9. Le procédé de n'importe laquelle des revendications précédentes comprenant en outre :

l'augmentation du rapport entre le débit molaire de la vapeur et le débit molaire d'hydrocarbures dans le courant d'alimentation (21), en réponse à l'étape de mesure du contenu en hydrocarbures C2+ ;

la mesure du contenu en hydrocarbures C2+ dans la portion conditionnée (85), tout en faisant réagir le courant d'alimentation (21) avec le rapport augmenté dans le premier réacteur (100) ;

la comparaison du contenu en hydrocarbures C2+ avec une valeur de contenu admissible représentative du contenu en hydrocarbures C2+ dans la portion conditionnée (85) au rapport augmenté entre le débit molaire de la vapeur et le débit molaire d'hydrocarbures ; et
le remplacement du catalyseur (105) dans le premier réacteur (100) si le contenu en hydrocarbures C2+ mesuré est supérieur à la valeur de contenu admissible.

**10.** Le procédé de n'importe laquelle des revendications précédentes, dans lequel l'étape de conditionnement comprend :

Le refroidissement de la seconde portion (32) dans un échangeur de chaleur (50) du courant de produit intermédiaire (30) pour condenser l'eau de la seconde portion (32), en formant ainsi une fraction liquide et une fraction de vapeur ;
La division de la seconde portion refroidie (32) en une portion enrichie en fraction de vapeur appauvrie en eau (65) ayant un débit massique moyenné dans le temps, $F_1$, et une portion enrichie en fraction liquide (59) ayant un débit massique moyenné dans le temps, $F_2$; et
L'élimination d'au moins l'eau et l'ammoniac de la portion enrichie en fraction de vapeur appauvrie en eau (65) pour former la portion conditionnée (85) ; dans lequel $F_1$ et $F_2$ sont régulés de telle manière que

$$0 < \frac{F_1}{F_1 + F_2} \le 0.2 \,.$$

**11.** Le procédé de n'importe laquelle des revendications précédentes, dans lequel la régulation du rapport ($F_s/F_{HC}$) entre le débit molaire de vapeur et le débit molaire d'hydrocarbures dans le courant d'alimentation (21) est principalement ou uniquement basée sur le contenu en hydrocarbures C2+ mesuré dans la portion conditionnée (85).

**12.** Le procédé de n'importe laquelle des revendications précédentes, dans lequel le contenu en hydrocarbures C2+ est soit une concentration d'hydrocarbures C2+ dans la portion conditionnée (85) de la seconde portion (32) du courant de produit intermédiaire (30), soit un rapport entre le contenu en hydrocarbures C2+ et un contenu mesuré en $H_2$, CO ou $CH_4$ dans la portion conditionnée (85).

FIG.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090232729 A1
- US 20090094894 A1
- US 4105591 A
- US 3882636 A
- US 3988425 A
- GB 969637 A
- GB 1150066 A
- GB 1155843 A
- US 6110979 A